(19) Europäisches Patentamt
European Patent Office
Office européen des brevets

(11) **EP 4 055 411 B1**

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(21) Anmeldenummer: **20803541.0**

(22) Anmeldetag: **06.11.2020**

(51) Internationale Patentklassifikation (IPC):
**G01S 13/86** (2006.01)   **G01S 13/931** (2020.01)
**G01S 17/931** (2020.01)   **G01S 7/40** (2006.01)
**G01S 7/497** (2006.01)   **G05B 23/02** (2006.01)
**G01S 13/87** (2006.01)

(52) Gemeinsame Patentklassifikation (CPC):
**G01S 13/865; G01S 7/497; G01S 13/87; G01S 13/931; G01S 17/931;** G01S 2013/93273

(86) Internationale Anmeldenummer:
**PCT/EP2020/081301**

(87) Internationale Veröffentlichungsnummer:
**WO 2021/089787 (14.05.2021 Gazette 2021/19)**

(54) **VERFAHREN, VORRICHTUNG UND COMPUTERPROGRAMM ZUR FREIGABE EINES SENSORSYSTEMS ZUR ERFASSUNG VON OBJEKTEN IN EINEM UMFELD EINES FAHRZEUGES**

METHOD, APPARATUS AND COMPUTER PROGRAM FOR ENABLING A SENSOR SYSTEM FOR DETECTING OBJECTS IN AN ENVIRONMENT OF A VEHICLE

PROCÉDÉ, APPAREIL ET PROGRAMME INFORMATIQUE D'ACTIVATION D'UN SYSTÈME DE DÉTECTION PERMETTANT DE DÉTECTER DES OBJETS DANS UN ENVIRONNEMENT D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2019 DE 102019217257**

(43) Veröffentlichungstag der Anmeldung:
**14.09.2022 Patentblatt 2022/37**

(73) Patentinhaber: **ZF Friedrichshafen AG 88046 Friedrichshafen (DE)**

(72) Erfinder:
- **RUCHTI, Martin 88048 Friedrichshafen (DE)**
- **NÄGELE, Thomas 88045 Friedrichshafen (DE)**
- **RINKENAUER, Stefan 88677 Markdorf (DE)**
- **KLIMKE, Jens 88046 Friedrichshafen (DE)**
- **MOERS, Tobias 88046 Friedrichshafen (DE)**
- **RAUDSZUS, Dominik 88046 Friedrichshafen (DE)**
- **WEBER, Hendrik 88046 Friedrichshafen (DE)**
- **SCHOLTES, Maike 88046 Friedrichshafen (DE)**
- **ECKSTEIN, Lutz 52066 Aachen (DE)**

(74) Vertreter: **ZF Friedrichshafen AG Gewerblicher Rechtsschutz Löwentalerstraße 20 88046 Friedrichshafen (DE)**

(56) Entgegenhaltungen:
**DE-A1- 102004 052 242**

- **MELTZ DANIEL ET AL: "Functional Safety Verification for Autonomous UGVs-Methodology Presentation and Implementation on a Full-Scale System", IEEE TRANSACTIONS ON INTELLIGENT VEHICLES, IEEE, vol. 4, no. 3, 1 September 2019 (2019-09-01), pages 472 - 485, XP011742977, ISSN: 2379-8858, [retrieved on 20190826], DOI: 10.1109/TIV.2019.2919460**

- DUTTA RAJ GAUTAM ET AL: "Quantifying trust in autonomous system under uncertainties", 2016 29TH IEEE INTERNATIONAL SYSTEM-ON-CHIP CONFERENCE (SOCC), IEEE, 6 September 2016 (2016-09-06), pages 362 - 367, XP033086820, DOI: 10.1109/SOCC.2016.7905511
- J. KAPINSKI: "Simulation-Based Approaches for Verification of Embedded Control Systems: An Overview of Traditional and Advanced Modeling, Testing, and Verification Techniques", IEEE CONTROL SYSTEMS, vol. 36, no. 6, 1 December 2016 (2016-12-01), USA, pages 45 - 64, XP055763632, ISSN: 1066-033X, DOI: 10.1109/MCS.2016.2602089
- KALRA NIDHI ET AL: "Driving to safety: How many miles of driving would it take to demonstrate autonomous vehicle reliability?", TRANSPORTATION RESEARCH PART A: POLICY AND PRACTICE, vol. 94, 10 September 2016 (2016-09-10), pages 182 - 193, XP029815485, ISSN: 0965-8564, DOI: 10.1016/J.TRA.2016.09.010

**Beschreibung**

Die Erfindung betrifft ein Verfahren und ein Computerprogramm zur Freigabe eines Sensorsystems zur Erfassung von Objekten in einem Umfeld eines Fahrzeuges. Die Erfindung bezieht sich insbesondere auf die Freigabe bezüglich systematisch und statistisch auftretender SOTIF Risiken. SOTIF bedeutet safety of the intended functionality..

Für den Übergang eines technischen Systems von der Entwicklungsphase in die Serienproduktion ist die Freigabe dieses Systems notwendig. Die Freigabe erfolgt erst dann, wenn die zuvor definierten Anforderungen, insbesondere die Anforderungen an die Sicherheit des technischen Systems, von diesem technischen System erfüllt werden. Freigabekonzepte, die aktuell in der Automobilindustrie eingesetzt werden, erzielen Freigaben für verschiedene Automatisierungsstufen, bei denen stets die Kontrollierbarkeit durch einen menschlichen Fahrer, sei es durch direkte Kontrolle des Fahrers oder durch Rückfallebene auf den Fahrer, gegeben ist.

Eine Besonderheit des autonomen Fahrens ist der Wegfall der Rückfallebene auf den menschlichen Fahrer ab einer bestimmten Automatisierungsstufe, beispielsweise SAE Level 3+. Die Sicherheit ergibt sich dann ausschließlich aus dem technischen System Fahrroboter und Fahrzeug. In "Autonomes Fahren - Technische, rechtliche und gesellschaftliche Aspekte", Springer Vieweg, 2015, offenbaren Wachenfeld und Winner in ihrem Beitrag "Die Freigabe des autonomen Fahrens", dass ausgehend von 3375 polizeilich erfassten Unfällen mit Getöteten in Deutschland im Jahr 2012 und einer Fahrleistung von 709 Milliarden Kilometer in Deutschland bedeutet diese Zahl als Durchschnittswert bedeutet, dass zwischen zwei Unfällen mit Getöteten 210 Millionen Kilometer liegen. Ausgehend von einer Poisson-Verteilung dieser Zahlen und der Anforderung, dass das autonome Fahrzeug zweimal so gut sein soll wie aktuelle, von menschlichen Fahrern gefahrene Fahrzeuge, müsste das autonome Fahrzeug eine Teststrecke von mindestens 2,1 Milliarden Kilometer zurücklegen. In diesem Fall wäre der Nachweis mit 50%iger Wahrscheinlichkeit erbracht. Allerdings werden mit derselben Wahrscheinlichkeit fünf Unfälle erfahren. Ein weiteres statistisches Modell, das sich mit der Frage befasst, wie viele Testkilometer ein autonomes Fahrzeug fahren müsste, um zu zeigen, dass es hinsichtlich Sicherheit und Risiko zuverlässig ist, ist das RAND Modell, siehe http://www.jstor.org/stable/10.7249/j.ctt1btc0xw. Das Rand Modell liefert eine Zahl von 8,8 Milliarden Testkilometer. Ein weiteres Modell ist das Minimal Endogenous Mortality, abgekürzt MEM, Modell zur Risikoanalyse für sicherheitsrelevante Systeme wie Bahnanlagen oder Kraftwerken. Für einen Autobahnpiloten liefert das MEM Modell als Schwellenwert für die Mortalität $10^{-9}$/Stunde.

Eine derartig extrem hohe Anzahl an Absicherungskilometer stellt eine Herausforderung an die Freigabe. Zusätzlich fehlen gesetzliche Anforderungen an die Freigabe autonomer Fahrzeuge. Dadurch werden autonome Fahrzeuge in absehbarer Zeit mittels Stands der Technik nicht freigegeben werden können. Für die Freigabe und die Berechnung des zu erwartenden Restrisikos eines Systems fehlen im Stand der Technik anwendbare Verfahren, obwohl in dem SOTIF-Standard ISO/PAS 21448:2019 "Road vehicles -- Safety of the intended functionality" solche Verfahren gefordert werden.

MELTZ DANIEL ET AL: "Functional Safety Verification for Autonomous UGVs-Methodology Presentation and Implementation on a Full-Scale System", IEEE TRANSAC-TIONS ON INTELLIGENT VEHICLES, IEEE, Bd. 4, Nr. 3, 1. September 2019 (2019-09-01), Seiten 472-485, XP011742977, ISSN: 2379-8858, DOI: 10.1109/TIV.2019.2919460 beschreibt die Erstellung eines Test-Algorithmus parallel zur Systementwicklung. Dessen Simulationen für alle möglichen Szenarien werden zufällig abgetastet und dienen zur Erzeugung einer statistischen Verteilung mit einem Konfidenz-Bereich. Abschließend wird das reale System mit einer kleinen Anzahl von realen Szenarien getestet und die statische Verteilung mit derjenigen der Simulationen vergleichen. Hieraus folgt eine Verifikation (Freigabe) des Systems. Bei dem verwendeten Beispielsystem handelt es sich um einen kleinen autonomen Bulldozer zur Minenräumung.

DUTTA RAJ GAUTAM ET AL: "Quantifying trust in autonomous system under uncertainties", 2016 29TH IEEE INTERNATIONAL SYSTEM-ON-CHIP CONFERENCE (SOCC), IEEE, 6. September 2016 (2016-09-06), Seiten 362-367, XP033086820, DOI: 10.1109/SOCC.2016.7905511 beschreibt die Verifikation der Sicherheit des autonomen Fahrzeuges mittels eines Wahrscheinlichkeitsansatzes gemäß SMC (Statistical Probabilistic Model Checking). Hierbei werden alle Systemkomponenten in einem Wahrscheinlichkeitsmodell beschrieben und mittels Monte-Carlo-Verfahren im Modell simuliert.

J. KAPINSKI: "Simulation-Based Approaches for Verification of Embedded Control Systems: An Overview of Traditional and Advanced Modeling, Testing, and Verification Techniques", IEEE CONTROL SYSTEMS, Bd. 36, Nr. 6, 1. Dezember 2016 (2016-12-01), Seiten 45-64, XP055763632, USA ISSN: 1066-033X, DOI: 10.1109/MCS.2016.2602089 behandelt eine Übersicht zu Test und Verifikation von hybriden System, zu denen z.B. autonome Steuerungen zählen. Da es prinzipiell unmöglich ist, ein hybrides System algorithmisch zu verifizieren, werden verschiedene Ansätze mittels Simulationen vorgestellt, wobei die Simulation auf Modelle der Systeme angewendet werden.

Die aus dem Stand der Technik bekannten statistischen Modelle beziehen sich auf das Gesamtsystem autonomes Fahrzeug und sind nicht ohne Weiteres ausschließlich auf die Perzeption, das heißt Erfassung oder Wahrnehmung von Objekten in einem Umfeld eines Fahrzeuges, anwendbar. Mittels der Statistiken ist keine Abgrenzung von Unfällen, die auf Fehler in der Erfassung beruhen, möglich. Es ist nicht davon auszugehen, dass kein Fehler in der Erfassung zu keinem Unfall führt. Das Forschungsprojekt PEGASUS, das bedeutet Projekt zur Etablierung von generell akzeptierten Güterkriterien, Werkzeugen und Methoden sowie Szenarien und Situationen zur Freigabe hochautomatisierter Fahrfunktionen, bietet zwar einen umfassenden Ansatz zu Absicherung von SAE J 3016 Level 3 Systemen. Der szenenbasierte Ansatz ist allerdings mangels valider Sensormodelle nicht zur Absicherung der Perzeption, sondern nur zur Absicherung der Entscheidungs- und Planungsalgorithmen für eine Fahrstrategie anwendbar.

Eine Aufgabe der vorliegenden Erfindung war es, für die Freigabe eines Sensorsystems zur Erfassung von Objekten in einem Umfeld eines Fahrzeuges eine Anzahl an Absicherungskilometern zu reduzieren.

Die Gegenstände der Erfindung lösen diese Aufgabe durch Betrachtung von Abweichungskombinationen einzelner Sensoren des Sensorsystems und Berechnung einer Versagenswahrscheinlichkeit. Damit wird ein vorhandenes Restrisiko eines autonomen Fahrzeugs analysiert. Weitere Aspekte einer Freigabe, beispielsweise funktionale Tests, Fehlerreaktionstests oder Hardwaretests, sind mitumfasst.

Gemäß einem Aspekt stellt die Erfindung ein Verfahren bereit zur Freigabe eines Sensorsystems zur Erfassung von Objekten in einem Umfeld eines Fahrzeuges. Das Verfahren umfasst die folgenden Verfahrensschritte:

- Bereitstellen einer gemeinsamen Wahrscheinlichkeitsverteilung für Abweichungen zwischen Ausgangsdaten des Sensorsystems und Referenzdaten auf Ebene von Programmabschnitten zum Erfassen von Objekten des Sensorsystems, auf Ebene von Sensoren des Sensorsystems und/oder auf Fusionsebene des Sensorsystems,
- Abtasten von Abweichungskombinationen und Berechnen von Auftrittswahrscheinlichkeiten für die abgetasteten Abweichungskombinationen mittels der gemeinsamen Wahrscheinlichkeitsverteilung,
- Beaufschlagen der Referenzdaten mit den abgetasteten Abweichungskombinationen, Prozessieren der beaufschlagten Referenzdaten mittels einer Fusionseinheit des Sensorsystems und Erhalten von Fusionsergebnissen,
- Entfernen derjenigen Auftrittswahrscheinlichkeiten aus der gemeinsamen Wahrscheinlichkeitsverteilung, aus deren zugrundeliegenden Abweichungskombinationen solche Fusionsergebnisse resultieren, welche eine vorgegebene Bedingung erfüllen, und Erhalten einer Restwahrscheinlichkeitsverteilung,
- Integration der Restwahrscheinlichkeitsverteilung und Erhalten einer absoluten Fehlerwahrscheinlichkeit und
- Freigabe des Sensorsystems in Abhängigkeit der absoluten Fehlerwahrscheinlichkeit.

Das erfindungsgemäße Verfahren ist nach einem Aspekt der Erfindung computerimplementiert.

Im Rahmen der Erfindung kann auch eine Vorrichtung liegen zur Freigabe eines Sensorsystems zur Erfassung von Objekten in einem Umfeld eines Fahrzeuges. Die Vorrichtung umfasst wenigstens eine Prozessiereinheit, die derart angepasst ist, dass sie die Schritte des erfindungsgemäßen Verfahrens ausführt. Die Prozessiereinheit ist nach einem Aspekt der Erfindung eine Hardware, beispielsweise ein Computer oder Teile davon, eines Steuergeräts des Fahrzeuges. Die Prozessiereinheit ist auch ausgeführt, Ausgangsdaten einzelner Sensoren des Sensorsystems zu fusionieren.

Im Rahmen der Erfindung kann auch ein Sensorsystem liegen zur Erfassung von Objekten in einem Umfeld eines Fahrzeuges. Das Sensorsystem umfasst mehrere Sensoren einer Sensortechnologie oder je Sensortechnologie wenigstens einen Sensor, eine erfindungsgemäße Vorrichtung und eine Fusionseinheit, die Daten fusioniert.

Gemäß einem weiteren Aspekt stellt die Erfindung ein Computerprogramm bereit zur Freigabe eines Sensorsystems zur Erfassung von Objekten in einem Umfeld eines Fahrzeuges. Das Computerprogramm umfasst Befehle, die bei der Ausführung des Computerprogramms durch eine Prozessiereinheit diese veranlassen, die Schritte des erfindungsgemäßen Verfahrens auszuführen. Die Befehle sind in einer Programmiersprache, beispielsweise einer objektorientierten Programmiersprache, zum Beispiel C++, formuliert. Nach einem Aspekt der Erfindung wird das Computerprogramm von der Prozessiereinheit der erfindungsgemäßen Vorrichtung ausgeführt.

Gemäß einem weiteren Aspekt stellt die Erfindung einen computerlesbaren Datenträger, auf dem das erfindungsgemäße Computerprogramm gespeichert ist, bereit. Der Datenträger ist beispielsweise ein Halbleiterspeicher in Form eines Speichermoduls, beispielsweise einer Speicherkarte. Der Halbleiterspeicher ist beispielsweise ein Flash Speicher. Der Datenträger wird beispielsweise mit einer Eingangsschnittstelle eines Steuergeräts des Fahrzeuges verbunden. Damit kann das Steuergerät des Fahrzeuges das Verfahren ausführen.

Im Rahmen der Erfindung kann auch ein Fahrzeug liegen. Das Fahrzeug umfasst wenigstens ein erfindungsgemäßes Sensorsystem, wenigstens ein Steuergerät und Aktuatoren, wobei das Sensorsystem, das Steuergerät und die Aktuatoren derart Signal übertragend verbunden sind, dass das Fahrzeug wenigstens bedingt autonom fährt. Ferner umfasst das Fahrzeug eine Schnittstelle zu wenigstens einem Referenzsensorsystem. Außerdem umfasst das Fahrzeug eine erfindungsgemäße Vorrichtung. Während Fahrten des Fahrzeuges wird eine absolute Fehlerwahrscheinlichkeit nach den Schritten des erfindungsgemäßen Verfahrens erhalten und diese in eine Fahrstrategie des Fahrzeuges rückgekoppelt. Nach einem Aspekt der Erfindung wird eine Aussage über die absolute Fehlerwahrscheinlichkeit in Abhängigkeit des Systemzustandes des Sensorsystems, der Umgebungsbedingungen und de Objekte in der Nähe des Fahrzeuges in die Fahrstrategie rückgekoppelt. Bedingt autonom fahren bedeutet, dass das autonome Fahrzeug Quer- und Längsführung und Umfeldbeobachtung durchführt, ein menschlicher Fahrer aber als Rückfallebene auf Anforderung zum Eingreifen reagieren muss. Das Fahrzeug ist beispielsweise ein Straßenfahrzeug. Nach einem Aspekt der Erfindung ist das Fahrzeug ein autonomer people mover.

Gemäß einem weiteren Aspekt der Erfindung stellt die Erfindung ein Datenträgersignal bereit, das das erfindungsgemäße Computerprogramm überträgt. Beispielsweise ist das Computerprogramm in einer Datenbank, beispielsweise einem Cloud-Speicher, hinterlegt. Mittels des Datenträgersignals kann eine ganze Flotte von Fahrzeugen erreicht werden, um Sensorsysteme der einzelnen Fahrzeuge zu validieren. Dazu wird das erfindungsgemäße Computerprogramm mittels des Datenträgersignals beispielsweise von dem Cloud-Speicher auf Steuergeräte der Fahrzeuge der Fahrzeugflotte übertragen und das erfindungsgemäße Verfahren wird ausgeführt. Die Steuergeräte umfassen nach einem Aspekt der Erfindung Mittel für einen Netzwerkbetrieb, beispielsweise einen transmission control protocol, abgekürzt TCP, oder internet protocol, abgekürzt IP, Netzwerk-Stack. Dadurch wird eine größere Testbasis erhalten, da von jedem Fahrzeug der Flotte eingefahrene Daten verwendet werden können.

Weitere Ausgestaltungen der Erfindung ergeben sich aus den Unteransprüchen, den Zeichnungen und der Beschreibung bevorzugter Ausführungsbeispiele.

Das Sensorsystem oder auch Umfeldwahrnehmungssystem genannt ist ein System zur Perzeption von Umfeld- und/oder Fahrzeugzustandsgrößen. Das Sensorsystem ist ein ADAS oder AD Sensorsystem. ADAS bedeutet Advanced Driver Assistance System, das heißt Fahrerassistenzsystem, das sind elektronische Zusatzeinrichtungen zur Unterstützung des Fahrers in bestimmten Fahrersituationen. AD bedeutet Autonomous Driving, das heißt autonomes Fahren. Das Sensorsystem umfasst mehrere Sensoren einer Sensortechnologie oder je Sensortechnologie wenigstens einen Sensor. Mittels mehrerer Sensoren ist das Sensorsystem ein redundantes System. Sensortechnologien sind beispielsweise optische Technologien. Sensoren aus dem Bereich der optischen Technologien umfassen beispielsweise Bildsensoren, beispielsweise für den Sichtbereich oder Infrarotbereich, Kamerasysteme mit Bildsensoren, beispielsweise Mono-, Stereo-, 3D- Kameras, oder Lichtlaufzeitsensoren, im Englischen time off light genannt, beispielsweise Lidarsensoren oder Lidarsysteme. Eine weitere Sensortechnologie ist Radartechnologie mit Radarsensoren und Radarsystemen. Eine weitere Sensortechnologie beruht auf Luft- und/oder Körperschall. Sensoren dieser Sensortechnologie sind beispielsweise Ultraschallsensoren oder Mikrofone. Die Sensoren messen beispielsweise x-y-z Positionen von Objekten, Elevations-, Azimutwinkel und Abstand von Objekten zu einem Sensorbezugspunkt oder Geschwindigkeitsvektoren von Objekten. Die Messungen der einzelnen Sensoren werden von Programmabschnitten, die beispielsweise von einer Hardware des Sensors prozessiert werden, in diesem Fall ist der Sensor ein System-on-a-Chip, abgekürzt SoC, als Objektlisten ausgegeben. Die Programmabschnitte sind beispielsweise Teile von Merkmalsextraktionsalgorithmen. Das Sensorsystem umfasst auch eine Fusionseinheit, beispielsweise eine Rechnerplattform umfassend Prozessoren, beispielsweise CPUs und/oder GPUs. Die Rechnerplattform führt Programme, beispielsweise Fusionsalgorithmen, aus, die aus den Objektlisten der einzelnen Sensoren fusionierte Objektlisten erzeugen. Das Sensorsystem ist ein reales Sensorsystem zur Verwendung im Straßenverkehr. Die Ausgangsdaten des Sensorsystems sind reale Testdaten, das heißt Daten, die in einem Feldversuch aufgenommen wurden. Mittels des erfindungsgemäßen Verfahrens werden auch Sensormodelle und/oder Modelle von Sensorsystemen validiert. Sensormodelle beschreiben einen Sensor in einer virtuellen Testumgebung. Ein Sensormodell beschreibt und/oder simuliert die Interaktion zwischen einem Sensor und der virtuellen Testumgebung.

Die Referenzdaten werden mittels eines Referenzsensorsystems erhalten. Das Referenzsensorsystem überprüft oder validiert die Ausgangsdaten des Sensorsystems. Das Referenzsensorsystem ist ebenfalls ein Sensorsystem, das beispielsweise an dem Fahrzeug angeordnet ist. Alternativ werden die Referenzdaten ausgehend von synthetischen Sensorsituationen innerhalb eines definierten Parameterraums simuliert. Die Referenzdaten sind Ausgangsdaten einzelner Sensoren des Referenzsensorsystems oder Fusionsergebnisse des Referenzsensorsystems. Die Sensoren des Referenzsensorsytems sind insbesondere hochauflösende Sensoren, beispielsweise umfasst das Referenzsensorsystem einen Velodyne HDL-64E Lidar Sensor.

Die Abweichungen umfassen Existenzfehler, beispielsweise Erkennungsfehler. Zum Beispiel wurde ein Objekt vom Sensorsystem erkannt, obwohl kein Objekt in den Referenzdaten vorhanden ist. Ein derartiger Fehler ist ein false positive Fehler. Oder ein Objekt wurde vom Sensorsystem nicht erkannt, obwohl ein Objekt in den Referenzdaten vorhanden ist. Ein derartiger Fehler ist ein false negative Fehler. Ferner umfassen die Abweichungen Klassifizierungsfehler. Beispielsweise hat das Sensorsystem einen Fußgänger erkannt, obwohl das Objekt tatsächlich ein Fahrzeug ist. Außerdem umfassen die Abweichungen Messfehler in kontinuierlichen und/oder diskreten Messgrößen. Beispielsweise hat das Sensorsystem die Position eines erkannten Objekts um x Meter in Fahrtrichtung falsch erkannt oder die Breite einer Straße um y Meter falsch gemessen. Diese Arten der Abweichungen, einzeln oder kumuliert, können in einem Sensorsystem einen kritischen Fehler auslösen, beispielsweise einen Fehler, der ein Risiko für die SOTIF, darstellt. Die Sicherheit der beabsichtigten Funktionalität liegt vor bei Fehlen eines unangemessenen Risikos aufgrund von Gefährdungen durch Funktionsmängel der beabsichtigten Funktionalität oder durch vernünftigerweise vorhersehbaren Missbrauch durch Personen. Ein SOTIF Risiko besteht zum Beispiel dann, wenn ein Objekterkennungsalgorithmus eine Person, die auf einem Skateboard fährt, als Person erkennt, aber diese Erkennung als Fehler verwerft aufgrund der nicht plausiblen Geschwindigkeit der Person. Erfindungsgemäß werden diese Abweichungen validiert, um mittels der absoluten Fehlerwahrscheinlichkeit eine Freigabe Sensorsystems zu rechtfertigen. Damit stellt das erfindungsgemäße Verfahren auch eine Lösung zur Validierung von SOTIF bereit. Die Abweichungen werden mit einer Auswertelogik ausgewertet. Die Auswertelogik umfasst beispielsweise ein IC, ASIC oder FPGA Bauteil oder ist als Programm in Form von Softwarecodeabschnitten realisiert. Das Programm wird beispielsweise von einem Datenlesegerät, das die Auswertelogik umfasst, ausgeführt. Das Programm erhält als Dateneingang die Messungen der Sensoren des Sensorsystems und die Referenzdaten. Als Datenausgang werden die Abweichungen bereitgestellt.

Die gemeinsame Wahrscheinlichkeitsverteilung, auch joint probability genannt, gibt die statistische Abhängigkeit der Abweichungen der einzelnen Sensoren zueinander an. Durch die gemeinsame Wahrscheinlichkeitsverteilung ist es möglich, Sensorsysteme auszuwerten, bei denen Abweichungen nicht statistisch unabhängig sind. Die gemeinsame Wahrscheinlichkeitsverteilung wird beispielsweise mittels modellierten Wahrscheinlichkeitsverteilungen für die Abweichungen der einzelnen Sensoren des Sensorsystems bereitgestellt. Beispielsweise wird die gemeinsame Wahrscheinlichkeitsverteilung mit MathWorks® bereitgestellt. Die modellierten Wahrscheinlichkeitsverteilungen approximieren die Abweichungen der einzelnen Sensoren. Die Abbildungsgüte der Modelle bezogen auf die beobachteten Abweichungen wird mittels sogenannten Goodness of Fit, abgekürzt GoF, Metriken, die beispielsweise computerimplementiert ausgeführt werden, bestimmt. GoF Metriken sind beispielsweise $\chi^2$, Anderson Darling test, negative log likelihood, Bayesian information criterion, Akaike information criterion, normalized root mean squared error oder root mean squared error. Beispielsweise ist die normalized root mean squared error GoF wie folgt definiert:

$$GoF = 1 - \frac{\left\| x_{ref}(i) - x(i) \right\|}{\left\| x_{ref}(i) - mean\left( x_{ref}(i) \right) \right\|}$$

wobei x(i) die Werte der Wahrscheinlichkeitsverteilung und $x_{ref}$(i) die Modellwerte sind.

Der Wert der GoF gibt an, wie repräsentativ ein Modell bezogen auf Daten ist. Ist der Wert schlecht, sind die Aussagen des Modells weniger sicher. Ist der Wert gut, kann der Aussage des Modells vertraut werden. In der GoF ist damit eine Aussage der Modellgenauigkeit bezogen auf die Auswahl der Modellparameter abgebildet.

Die Wahrscheinlichkeit, Abweichungen einzelner Sensoren, das heißt einzelne Sensorfehler, im Feldversuch zu finden, ist höher als gleichzeitig auftretende Fehler mehrerer Sensoren zu finden. Aus diesem Grund werden Abweichungen einzelner Sensoren im Feld erfasst und als Abweichungskombinationen miteinander kombiniert. Kombiniert wird beispielsweise, dass bei einer Distanzerfassung ein Radar eine Abweichung von p% Wahrscheinlichkeit, eine Kamera eine Abweichung von q% Wahrscheinlichkeit und ein Lidar eine Abweichung von r% Wahrscheinlichkeit aufweist. Erfindungsgemäß werden auch Abweichungsarten einzelner Sensoren kombiniert, beispielsweise dass eine Kamera ein false positive Ereignis erfasst hat, bei dem ein Fahrzeug als ein Fußgänger erkannt wurde und die Position des Fußgängers um x Meter in Fahrtrichtung falsch erkannt wurde. Durch die Abtastung von Abweichungskombinationen und Berechnung derer Auftrittswahrscheinlichkeiten werden kritische Bereiche in einem kombinierten Fehlerraum bewertet, obwohl diese Abweichungskombinationen im Feldversuch nur einzeln, aber nie gleichzeitig zu beobachten waren. Im Gegensatz zu den Daten, welche aus dem Feldversuch kommen, können durch das Abtasten der Abweichungskombinationen damit kombinierte Fälle erzeugt werden, die im Feldversuch nur sehr selten, teilweise bis zu einem Fehler pro x Milliarden Betriebsstunden, auftreten würden.

Die Abweichungskombinationen werden beispielsweise dadurch abgetastet, dass Abweichungen einzelner Sensoren schrittweise abgetastet werden. Nach einem Aspekt der Erfindung wird je Sensor nah um den Mittelwert der jeweiligen Abweichungen in dichteren Abständen abgetastet als an Stellen, die weiter vom Mittelwert entfernt liegen. Nach einem weiteren Aspekt der Erfindung werden uniforme oder Markov-Chain-Monte-Carlo Verfahren/Algorithmen eingesetzt, um Stichproben aus den Abweichungen zu ziehen. Ein derartiges Sampling wird beispielsweise derart gewählt, dass die Auswertung bezüglich kumuliertem Fehlerbereich optimal ist.

Beaufschlagen der Referenzdaten mit den abgetasteten Abweichungskombinationen wird beispielsweise dadurch realisiert, dass die Referenzdaten in Form von Objektlisten als Vektoren behandelt werden. Die Abweichungskombinationen werden als Fehlervektoren dargestellt. Die zu den Referenzdaten zugehörigen Vektoren und die Fehlervektoren werden addiert.

Die Fusionseinheit, auch high-level-object-fusion, abgekürzt HOF, genannt, führt einen Fusionsalgorithmus aus. Die Fusionseinheit erhält beispielsweise low-level-features von einzelnen Sensoren. Low-level-features sind beispielsweise Punkte oder Kanten. Aus diesen low-level-features erzeugt die Fusionseinheit high-level-features, beispielsweise semantisch zusammenhängende Bereiche, die ein Objekt ergeben. Jeder einzelne Sensor kann eine eigene Fusionseinheit umfassen, die Sensor spezifische high-level-features erzeugt. Die Fusionseinheit des Sensorsystems fusioniert dann die high-level-features der einzelnen Sensoren. Dadurch werden die einzelnen Sensoren plausibilisiert. Der Fusionsalgorithmus umfasst beispielsweise Befehle, die die Fusionseinheit veranlassen, Mittelwerte von Referenzdaten einzelner Sensoren zu fusionieren. Nach einem Aspekt der Erfindung wertet die Fusionseinheit zusätzlich die zeitliche Abhängigkeit des Fusionseingangs aus.

Die Restwahrscheinlichkeitsverteilung wird dadurch erhalten, dass aus einer Anforderung an die Fusionsergebnisse, auch requirement genannt, eine Beschreibung erzeugt wird. Zum Beispiel lautet die Anforderung "Objekte dürfen nur +-1 % der Distanz falsch positioniert wahrgenommen werden" oder "Objekte dürfen nicht länger als x Zyklen nicht erkannt werden". Die Beschreibung lautet "erfüllt die Anforderung" oder "erfüllt die Anforderung nicht". Ist das erfindungsgemäße Verfahren computerimplementiert, werden solche Anforderungen und Beschreibungen beispielsweise mit Befehlen für bedingte Anweisungen und Verzweigungen, beispielsweise if/else Konstrukten, realisiert. Die gemeinsame Wahrscheinlichkeitsverteilung wird mittels der Anforderungen und Bedingungen gefiltert.

Die Restwahrscheinlichkeitsdichte wird mittels bekannten numerischen Verfahrens, die computerimplementiert sind, integriert, beispielsweise mittels trapezoid numerischer Integration:

$$\int_a^b dx\, f(x) \approx \frac{1}{2}\sum_{n=1}^{N}(x_{n+1} - x_n)[f(x_n) + f(x_{n+1})].$$

Für die so erhaltene absolute Fehlerwahrscheinlichkeit werden Konfidenzintervalle bestimmt. Nach einem Aspekt der Erfindung werden Konfidenzintervalle auch auf den Verteilungsparametern der einzeln Sensor-Charakteristiken definiert. Die Konfidenz pflanzt sich dann in die Gesamtaussage fort. Bei einer hohen Konfidenz sind die Modellparameter sicher aus den einzelnen Abweichungen zu identifizieren. Sind die Modellparameter aus den Abweichungen nicht eindeutig zu identifizieren, ist die Konfidenz niedrig. Mittels der Konfidenzintervalle wird die Konvergenz der Fehlerwahrscheinlichkeit dargestellt. Die Konvergenz der Fehlerwahrscheinlichkeit gibt an, wie viele Testkilometer noch zu erfahren sind, damit die Fehlerwahrscheinlichkeit in einem bestimmten Konfidenzintervall liegt. In Abhängigkeit der Konfidenzintervalle und/oder der Konvergenz der Fehlerwahrscheinlichkeit wird das Sensorsystem freigegeben. Die Konfidenz ist für eine Aussage über die Leistungsfähigkeit und das Restrisiko des Sensorsystems notwendig, andernfalls ist die Aussage unsicher.

Die Restwahrscheinlichkeitsdichte entspricht einer Akkumulation von Fehlerbereichen des Sensorsystems. Mittels der absoluten Fehlerwahrscheinlichkeit entsteht eine Aussage über das dem System anhängende Restrisiko.

Diese Aussage wird dann im offline Fall als Legitimation der Testbasis beispielsweise hinsichtlich verwendeter Daten und/oder Szenarien herangezogen. Die Aussage lautet beispielsweise, dass ist die absolute Fehlerwahrscheinlichkeit gering ist. Da durch die Beobachtung der einzelnen Fehlerbilder nicht die in der Literatur aktuell geforderten 2 Milliarden Kilometer oder Stundenäquivalente notwendigerweise real eingefahren werden müssen, kann die Legitimation einer kleineren Testbasis die Freigabe einer autonomen Fahrzeugtechnologie überhaupt erst technisch möglich machen.

Im Online-Fall, das heißt während realen Fahrten des Fahrzeuges, kann die Auswertung des Restrisikos zur Risikominimierung des aktuellen Systemzustandes genutzt werden. Dies geschieht durch Rückkopplung der Risikoaussage in die Fahrstrategie oder in die Safety-Strategie.

Nach einem Aspekt der Erfindung werden zu Beginn des Verfahrens wenige Daten, das heißt Ausgangsdaten der Sensoren, Referenzdaten, jeweils real oder synthetisch, in das Verfahren eingebracht und eine erste Aussage erstellt. Zusätzlich wird eine Extrapolation der statistischen Aussagekraft vorgenommen. Damit kann unter Definition einer Ziel-Konfidenz eine Abschätzung einer Versuchsplanung stattfinden. Damit können in der Entwicklung von autonomen Fahrzeugen erhebliche Kosten gespart werden. Eine Aussage über die Leistungsfähigkeit des Sensorsystems ist erst nach tatsächlichem Fahren einer ausreichenden Strecke oder Zeit statisch abgesichert. Das Verfahren liefert die Ziel-Konfidenz. Die Extrapolation liefert eine Abschätzung vorweg. Wird das Verfahren in Inkrementen (oder laufend) mit neuen Daten des Feldversuchs gespeist, kann jeweils eine angepasste Berechnung durchgeführt werden. Damit wird einerseits die Planung genauer, weil die Extrapolation auf einer grö-ßeren Datenbasis angepasst wird. Andererseits wird die Aussage über das System statistisch aussagekräftiger durch aktuelle Konfidenz. Ist keine Konvergenz des Modells zu beobachten, ist die Modellierung unzureichend oder die Wahl der Approximationen unzureichend. In derartigen Fällen wird das Verfahren angepasst und die Berechnungen werden wiederholt.

Die Auswertung der Daten unterliegt der Ungenauigkeit der für die Analyse herangezogenen Referenz. Um diesem Umstand Rechnung zu tragen, wird nach einem Aspekt der Erfindung diese Ungenauigkeit für alle Referenzdaten berechnet oder abgeschätzt und den Referenzdaten zugeordnet. Mittels dieser Ungenauigkeit wird die maximal zu erreichende Genauigkeit der Gesamtabbildung des Sensorsystems bestimmt. Beispielsweise ist das Referenzsensorsystem ungenau, die Referenzdaten des Referenzsensorsystems entsprechen aber genau denen des Sensorsystems. Dadurch wird der Eindruck von Genauigkeit erweckt, die in diesem Fall nicht existiert. Durch die Bestimmung der Ungenauigkeit des Referenzsensorsystems ist die maximale Genauigkeit begrenzt und es wird in dem Beispiel keine hohe Genauigkeit errechnet.

Gemäß einer Ausgestaltung der Erfindung umfassen die Abweichungen zwischen den Ausgangsdaten des Sensorsystems und Referenzdaten Abweichungen von Distanzmessungen, Wetter abhängige oder Fahrzeugzustand abhängige Abweichungen. Beispielsweise werden die Abweichungen je Sensor des Sensorsystems über die Distanz betrachtet. Die Abweichungen werden in verschiedenen Szenarien betrachtet, beispielsweise "Zielobjekt bremst" oder "Anhalten und Weitefahren eines Ego- und/oder Fremdfahrzeuges". Durch die Wetter abhängigen Abweichungen wird beispielsweise auch ein Restrisiko in Abhängigkeit von Vorhandensein von Niederschlag, beispielsweise Regen oder Schnee, und dessen Intensität erhalten. Fahrzeugzustand abhängige Abweichungen bedeutet beispielsweise, dass die Abweichungen in Abhängigkeit einer Fahrzeuggeschwindigkeit ausgewertet werden, um ein Restrisiko bezogen auf die jeweilige Fahrzeuggeschwindigkeit zu erhalten.

Gemäß einer weiteren Ausgestaltung der Erfindung wird für jeden Sensor des Sensorsystems eine Wahrscheinlichkeitsverteilung für die Abweichungen dieses Sensors bereitgestellt und die Abweichungskombinationen werden mittels der einzelnen Wahrscheinlichkeitsverteilungen der Sensoren abgetastet. Die Wahrscheinlichkeitsverteilung für die Abweichungen eines einzelnen Sensors, auch deviation probability function genannt, werden beispielsweise dadurch erhalten, dass die Abweichungen in Distanzmessungen zwischen diesem Sensor und einem Referenzsensor in Intervallen mit Intervallbreite von 1m geclustert werden. Anders ausgedrückt wird ein zweidimensionales Histogramm erhalten. Das Histogramm basiert darauf, dass es in der Distanz des Objekts zum Egofahrzeug eine Clusterung in 1m Intervalllängen gibt. In jedem dieser Cluster gibt es ein Histogramm über die Abweichung der Referenz zu dem Sensor. Als Ergebnis wird ein Histogramm erhalten. Damit wird die Abhängigkeit der Distanz modelliert. Diese Daten im Cluster werden genutzt, um die Wahrscheinlichkeitsverteilung für Abweichungen dieses Sensors zu fitten. Für das Fitting werden parametrische oder nicht-parametrische Verteilungen verwendet.

Beispielsweise werden Normalverteilungen verwendet. Normalverteilungen sind parametrische Verteilungen mit zwei Parametern, nämlich dem Mittelwert $\mu$ und der Standardabweichung $\sigma$:

$$f(x, \mu, \sigma^2) = \frac{1}{\sqrt{2\pi\sigma^2}} e^{-\frac{(x-\mu)^2}{2\sigma^2}}$$

Nach einem weiteren Aspekt der Erfindung werden nicht-parametrische Kernel Verteilungen verwendet mit einer Kernel Funktion K und einem Bandbreiten Parameter h:

$$f_h(x) = \frac{1}{nh} \sum_{i=1}^{n} K(\frac{x - x_i}{h})$$

Die Kernel Funktion K ist eine nicht-negative, normierbare, symmetrische oder nicht-symmetrische Funktion. Eine nicht-symmetrische Funktion ermöglicht eine systematische Verschiebung des Fehlerraums in Richtung positiver Abweichung. Beispielsweise ist die Kernel Funktion Keine Gaußfunktion oder eine Beta-Verteilung. Der optimale Bandbreiten Parameter h wird beispielsweise mittels des AMISE Algorithmus oder mittels Kreuzvalidierungsmethoden bestimmt. Für mehrdimensionale Anwendungen werden mehrdimensionale Kernel Funktionen verwendet.

Das Fitting der Verteilungen wird beispielsweise mittels statistischem Bootstrappping durchgeführt, das nach einem Aspekt der Erfindung computerimplementiert ist. Bootstrapping wählt eine endliche Menge an zufälligen Stichproben aus einem Datensatz aus und analysiert die Stichprobe zum Beispiel Durchschnittswert $\mu$ oder Standardabweichung $\sigma$, bei jeder Ziehung.

Mittels der Wahrscheinlichkeitsverteilungen der Abweichungen der einzelnen Sensoren werden nach einem Aspekt der Erfindung künstliche Daten zu Abweichungen zwischen den Ausgangsdaten der Sensoren des Sensorsystems und Referenzdaten erzeugt. Die künstlich erzeugten Daten werden nach einem Aspekt der Erfindung zu realen Daten zu Abweichungen und/oder Abweichungskombinationen in vordefinierten Schritten addiert. Nach einem Aspekt der Erfindung wird das Verfahren bezogen auf die Menge der zur Verfügung stehenden Daten inkrementell durchgeführt, in dem künstliche Daten inkrementell zu den vorhandenen Daten addiert werden. Damit werden Trends des Verfahrens analysiert, beispielsweise wie sich die Konvergenz entwickelt. Außerdem wird analysiert, wie sich das Fitten in Abhängigkeit der zunehmenden Menge an Daten verhält. Nach einem Aspekt der Erfindung werden die künstlichen Daten für eine Extrapolationsbetrachtung herangezogen.

Nach einem weiteren Aspekt der Erfindung werden die Wahrscheinlichkeitsverteilungen für die Abweichungen der einzelnen Sensoren, die daraus resultierende gemeinsame Wahrscheinlichkeitsverteilung und deren Auswirkungen, beispielsweise die absolute Fehlerwahrscheinlichkeit, offline an einem Computer berechnet oder online im Fahrzeug berechnet. Für die online Berechnung ist das erfindungsgemäße Verfahren beispielsweise in Softwarecodeabschnitten implementiert, die von einer Hardware eines Steuergeräts des Fahrzeuges ausgeführt werden.

Nach einem weiteren Aspekt der Erfindung wird die gemeinsamen Wahrscheinlichkeitsverteilung als eine mehrdimensionale Normalverteilung für Abweichungen der einzelnen Sensoren des Sensorsystems bereitgestellt. Die mehr-

dimensionale Normalverteilung lautet:

$$f(x, \mu, \Sigma) = \frac{1}{\sqrt{|\Sigma|(2\pi)^d}} e^{(-\frac{1}{2}(x-\mu)\Sigma^{-1}(x-\mu)\prime)}$$

mit Kovarianzmatrix $\Sigma$ für Ausgangsdaten der Sensoren des Sensorsystems. Die Kovarianzmatrix ist die Verallgemeinerung der Varianz einer eindimensionalen Zufallsvariablen.

Gemäß einer weiteren Ausführungsform der Erfindung werden die Ausgangsdaten des Sensorsystems und die Referenzdaten während Fahrten mit dem Fahrzeug erhalten. Die Referenzdaten umfassen von einem Referenzsensorsystem aufgenommene Referenzdaten und/oder mittels Sensormodellen erzeugte Referenzdaten. Die Fahrten mit dem Fahrzeug werden beispielsweise auf speziell vorgesehenen Teststrecken durchgeführt.

Nach einem weiteren Aspekt der Erfindung werden die beaufschlagten Referenzdaten in Model in the Loop, Software in the Loop oder Hardware in the Loop Simulationen oder mittels Ersatzmodellen prozessiert. Dadurch wird die Kritikalität bezüglich Erkennungsfehlern bewertet und die Systemantwort des Sensorsystems auf die Abweichungskombinationen abgebildet. In Model in the Loop Simulationen wird ein eingebettetes System in einer Schleife zusammen mit einem Umgebungsmodell simuliert. Die Model in the Loop Simulation wird beispielsweise in der Entwicklungsumgebung MATLAB durchgeführt. Bei Hardware in the Loop wird ein eingebettetes System, beispielsweise das Sensorsystem oder die Fusionseinheit, über seine Ein- und Ausgänge an ein angepasstes Gegenstück, dem sogenannten HiL-Simulator, angeschlossen. Der HiL-Simulator bildet die reale Umgebung des Systems nach. Bei der Methode Software in the Loop wird im Gegensatz zu Hardware in the Loop keine besondere Hardware eingesetzt. Das erstellte Modell der Software wird lediglich in den für die Zielhardware verständlichen Code umgewandelt. Dieser Code wird beispielsweise auf einem Entwicklungsrechner zusammen mit dem simulierten Modell ausgeführt, anstatt wie bei Hardware in the Loop auf der Zielhardware zu laufen. Der Oberbegriff für Model, Software und Hardware in the loop ist XiL Verfahren. Damit wird die Systemantwort des Sensorsystems auf die Abweichungskombinationen bestimmt. Zur Bestimmung der Systemantwort werden auch mathematischer Ersatzmodelle, sogenannte surrogate models, genutzt, um Echtzeitberechnung online zu ermöglichen. Um die Berechnung der Auswirkung von beaufschlagten Referenzdaten in Echtzeit zu ermöglichen, können aus Daten gelernte Ersatzmodelle der Systemantwort erstellt werden. Diese können dann anstatt der XiL genutzt werden, um die Fehlerauswirkung zu prüfen. Zusätzlich ist es anhand eines solchen Ersatzmodells möglich, Systemoptimierung vereinfacht durchzuführen, da die Antwort invertierbar wird.

Nach einem weiteren Aspekt der Erfindung werden Bayesische-Inferenzen, mit welchen eine online und Echtzeit-Inferenz möglich wird, genutzt zur Bestimmung der Systemantwort. Alternativ werden die beaufschlagten Referenzdaten mittels spezieller Steuergeräte mit GPU-Unterstützung prozessiert zur Berechnung der Systemantwort. Weiter sind stark vereinfachte Modelle wie N aus K Modelle, welche die Systemantwort nur sehr rudimentär beschreiben, möglich. Derartige Modelle sind vor allem in konzeptuellen Vorentwicklungen und Systemoptimierungen in einer frühen Produktphase hilfreich.

Nach einem weiteren Aspekt der Erfindung werden die Fusionsergebnisse unter Verwendung einer Redundanz des Sensorsystems erhalten. Die Redundanz führt zu einer weiteren Reduktion der Absicherungskilometer. Umfasst das Sensorsystem drei Sensoren, wird bei einem Ausfall eines Sensors das Fusionsergebnis aus den übrigen Sensoren gebildet. Fallen zwei Sensoren aus, wird kein Fusionsergebnis generiert.

Erfindungsgemäß werden Abweichungen zwischen den Fusionsergebnissen und den Referenzdaten mit einer Grenzzustandsfunktion ausgewertet, um die Auftrittswahrscheinlichkeiten aus der Wahrscheinlichkeitsverteilung zu entfernen. Die Grenzzustandsfunktion, auch limit state function genannt, liefert bei einer Erfüllung einer Anforderung einen ersten Wert und bei Nicht-Erfüllung der Anforderung einen von dem ersten verschiedenen zweiten Wert. Beispielswiese liefert die Grenzzustandsfunktion bei einer Erfüllung einer Anforderung den Wert 0, bei Nicht-Erfüllung den Wert 1. Nach einem weiteren Aspekt der Erfindung ist die Grenzzustandsfunktion mehrdimensional. Mittels der Grenzzustandsfunktion wird damit der gesamte statistische Fehlerbereich des Sensorsystems bezüglich eines Restrisikos bewertet.

Nach einem weiteren Aspekt der Erfindung wird eine Menge der Ausgangsdaten und der Referenzdaten inkrementell vergrößert. Dadurch kann die Berechnung schritt für schritt angepasst werden.

Übersichtshalber wird das Verfahren und die Vorrichtung, die das Verfahren ausführt, zusammengefasst dargestellt:

Das Verfahren und die Vorrichtung werden bei einem autonomen Fahrzeug mit einer Datenaufzeichnung verwendet. Die Datenaufzeichnung erfolgt einerseits mit dem Sensorsystem. Zur Aufzeichnung der Daten müssen andererseits ausreichend genaue Referenzdaten parallel aufgezeichnet werden mit dem Referenzsensorsystem. Die Referenzdaten sind zeitlich und räumlich korreliert. Diese Referenz kann mittels eines ebenfalls am Fahrzeug befestigten Systems oder mittels externer Referenzsysteme aufgezeichnet werden.

In einer Speichereinheit, beispielsweise einer Datenbank, Cloud Speicher oder Speicherkarte, werden die Daten, das heißt die Ausgangsdaten des Sensorsystems, mit der Referenz assoziiert. Cloud/Rechencluster basierende Ausführungsformen der Erfindung ermöglichen das Prozessieren von sehr großen Datenmengen. Nach einem Aspekt der Erfindung wird die Erfindung auf einem Rechencluster ausgeführt. Mittels einer Auswertelogik werden Abweichungen zwischen Ausgabe des autonomen Systems und der Referenz ausgewertet, und zwar auf Gesamtsystemebene, das heißt mittels fusionierte Objektlisten, sowie auf Ebene von Einzelsensoren, das heißt Objektliste, Detektionen, Features aus einem oder mehreren Sensoren des gleichen Technologie-Typs, oder von Algorithmus-Teilelemente zur Erzeugung der Objektlisten, Detektionen, Features.

Folgend werden die statistischen Verteilungen einzelner Aspekte des Umfelderkennungssystems analysiert und mittels Kurvenanpassung mathematisch, numerisch und technisch abgebildet. Im Ergebnis werden die Wahrscheinlichkeitsverteilungen der Abweichungen einzelner Sensoren des Sensorsystems erhalten. Die Abbildung inkludiert des Weiteren die Auftretensabhängigkeit zwischen einzelnen Phänomenen. Folgend werden die einzelnen Abweichungen zueinander in Fehlerbildern räumlich und/oder zeitlich kombiniert. Diese Analyse resultiert in den Abweichungskombinationen.

Die Kritikalität der Fehlerbilder bezüglich Erkennungsfehlern wird bewertet. Hierzu sind verschiedene technische Verfahren und Systeme vorgesehen um die Systemantwort auf die Fehlerbilder abzubilden. Dafür werden perfekte Eingangsdaten mit zeitlich-räumlichen Fehlervektoren beaufschlagt und die Systemantwort mittels eines geeigneten Restsystems, das heißt einer Wahrnehmungssoftware oder eines Steuergeräts, ermittelt. Nach einem weiteren Aspekt der Erfindung wird die Kritikalität bezüglich einer Systemreaktion bewertet, beispielsweise wenn eine Trajektorie fehlerhaft wird, beispielsweise wenn die Trajektorie durch einen Fußgänger führt. In diesem Fall ist das Restsystem beispielsweise ein Perzeptionssystem oder eine Behaviour-Software. Die Auswahl der Verfahren richtet sich dabei nach dem Anwendungsgebiet, beispielsweise offline oder online. Die Erfindung umfasst beispielsweise:

- Software in the Loop oder Hardware in the Loop, wobei die tatsächliche Umfelderkennungssoftware genutzt wird, um die reale Auswirkung des Fehlers auf das System abzubilden. Dies wird vorzugsweise offline angewendet.
- Abbildungs-Modelle, auch Surrogate Models genannt, wobei die Systemantwort auf einer numerisch-mathematischen Weise approximiert wird. Dies wird vorzugsweise online angewendet. Denkbar sind hier auch Bayesische-Inferenzen mit welchen eine online und Echtzeit-Inferenz möglich wird. Auch die Prozessierung durch spezielle Steuergeräte mit GPU-Unterstützung, auf denen die Systemantwort errechnet wird, sind von der Erfindung umfasst.
- Weiter sind stark vereinfachte Modelle wie N aus K Modelle, welche die Systemantwort nur sehr rudimentär beschreiben, von der Erfindung umfasst. Diese sind vor allem in konzeptuellen Vorentwicklungen und Systemoptimierungen in einer frühen Produktphase hilfreich.

Durch das Verfahren wird initial und iterativ anpassend ein Absicherungsaufwand errechnet werden. Dadurch werden Planungen von Dauerläufen und Datenaufzeichnungen verbessert.

Durch eine Analyse der Fehlerbilder und deren Auswirkung auf das Sensorsystem wird die Auswirkung einzelner Fehlerquellen effektiver analysiert. Dadurch wird gezielter und kostengünstiger ein System entworfen, dass den Anforderungen genügt.

Beim Austausch von Sensoren in einem Sensorsystem wird das Verfahren und die Vorrichtung dazu verwendet, den Einfluss auf die Systemzuverlässigkeit einzuschätzen. Wenn die Daten statistisch ähnlich oder besser sind und die Auswirkung von beobachteten einzelnen Abweichungen des Sensors nicht zur Verschlechterung des Sensorsystems und dessen Restrisiko beitragen, kann der Sensor ersetzt werden.

Durch die Rückwärtsanalyse der Fehlerbilder, das heißt der Abweichungskombinationen, wird mittels des Verfahrens und der Vorrichtung gezielt der größte Fehlerbeitrag für das Sensorsystem ermittelt und das Sensorsystem dadurch verbessert. Damit wird die Entwicklungsarbeit effektiver und potentiell kostengünstiger. Im Gegensatz zu einer vollen numerischen Analyse der Sensitivität bezüglich Verbesserungspotential kann hier ein Element des Systems benannt werden, an dem eine Verbesserung den größten Einfluss hat.

Durch die online Berechnung erfolgt eine Abschätzung der aktuellen Zuverlässigkeit. Hierfür ist eine sehr effektive Berechnung notwendig, da die Aussage über die Zuverlässigkeit im Bereich einer Echtzeit vorliegen muss. Beispielsweise wird das Verfahren mittels Bayesischer Inferenz genutzt. Dadurch kommt es zu einer Erhöhung der technischen Sicherheit.

Für die Validierung und Bewertung von Teilsystemen eines autonomen Fahrzeugs wird nach einem Aspekt der Erfindung das erfindungsgemäße Verfahren verwendet, um die Charakterisierung des Erkennungssystems zu modellieren. Damit wird die Auswirkung der möglichen Fehler und deren Wahrscheinlichkeiten genutzt, um das Restrisiko des autonomen Fahrzeuges zu bewerten. Diese Nutzung ist sehr ähnlich einem Sensormodell für virtuelle Absicherung.

Zur Verbesserung der Effizient in Bezug auf den Datentransport bei der Berechnung wird das Verfahren bereits bei der Einführung neuer Daten in die Datenbank durchgeführt. Damit ist zumindest der erste Zugriff auf die Daten nicht mehr per erneutem Zugriff auf die Daten möglich. Bei erneuter Berechnung der Daten muss dann wieder ein normaler Lesezugriff durchgeführt werden.

Durch den Gegenstand der Erfindung wird ein SAE J3016 Level 3+ Sensorsystem durch die Reduktion der Absicherungskilometer freigegeben durch die Betrachtung von Abweichungskombinationen bei der Berechnung der Versagenswahrscheinlichkeit und, gemäß einem Aspekt der Erfindung, durch Nutzung einer wenigstens teilweisen Redundanz des Sensorsystems. Ferner wird mittels des Gegenstandes der Erfindung die Optimierung des Sensorsystems in der Entwicklung effizient durchgeführt.

Die in den Figuren

Fig. 1: Kamera-Daten-Clustering über Distanz,

Fig. 2: Histogramm der Verteilung der Abweichungen der Kamera-Daten aus Fig. 1,

Fig. 3: Bootstrapping Verteilung des Mittelwertes der Verteilung der Kamera-Daten aus Fig. 2,

Fig. 4: Bootstrapping Verteilung der Standardabweichung der Verteilung der Kamera-Daten aus Fig. 2,

Fig. 5: gefittete Wahrscheinlichkeitsverteilung Abweichungen der der Kamera-Daten aus Fig. 2 mit Konfidenzintervallen-Grenzen aus Mittelwert aus Fig. 3 und Standardabweichung aus Fig. 4,

Fig. 6: Histogramm der Verteilung von Abweichungen weiterer Kamera-Daten und gefittete Wahrscheinlichkeitsverteilung dieser Abweichungen,

Fig. 7: Histogramm der Verteilung von Abweichungen von Radar-Daten und gefittete Wahrscheinlichkeitsverteilung dieser Abweichungen,

Fig. 8: Histogramm der Verteilung von synthetischen Abweichungen von Lidar-Daten und gefittete Wahrscheinlichkeitsverteilung dieser Abweichungen,

Fig. 9: gemeinsame Wahrscheinlichkeitsverteilung von Abweichungen von Kamera-Daten und Radar-Daten für eine vorgegebene Abweichung von Lidar-Daten,

Fig. 10: Restwahrscheinlichkeitsverteilung der gemeinsamen Wahrscheinlichkeitsverteilung aus Fig. 9,

Fig. 11: mittels trapezoid numerischer Integration integrierte Restwahrscheinlichkeitsverteilung mit die Breite des Konfidenzintervalls anzeigenden Boxen,

Fig. 12: gefittete absolute Fehlerwahrscheinlichkeit mit unterer und oberer Konfidenz,

Fig. 13: offline Ausführungsbeispiel eines erfindungsgemäßen Verfahrens,

Fig. 14: online Ausführungsbeispiel eines erfindungsgemäßen Verfahrens,

Fig. 15: technische Struktur eines Ausführungsbeispiels einer erfindungsgemäßen Vorrichtung und

Fig. 16: Ausführungsbeispiel eines erfindungsgemäßen Fahrzeuges dargestellten Ausführungsbeispiele veranschaulichen die Erfindung.

In den Figuren bezeichnen gleiche Bezugszeichen gleiche oder funktionsähnliche Teile. In den jeweiligen Figuren werden übersichtshalber die für das jeweilige Verständnis relevanten Bezugsteile angegeben. Die Maßeinheit der Distanzen und Abweichungen ist in allen Figuren jeweils Meter.

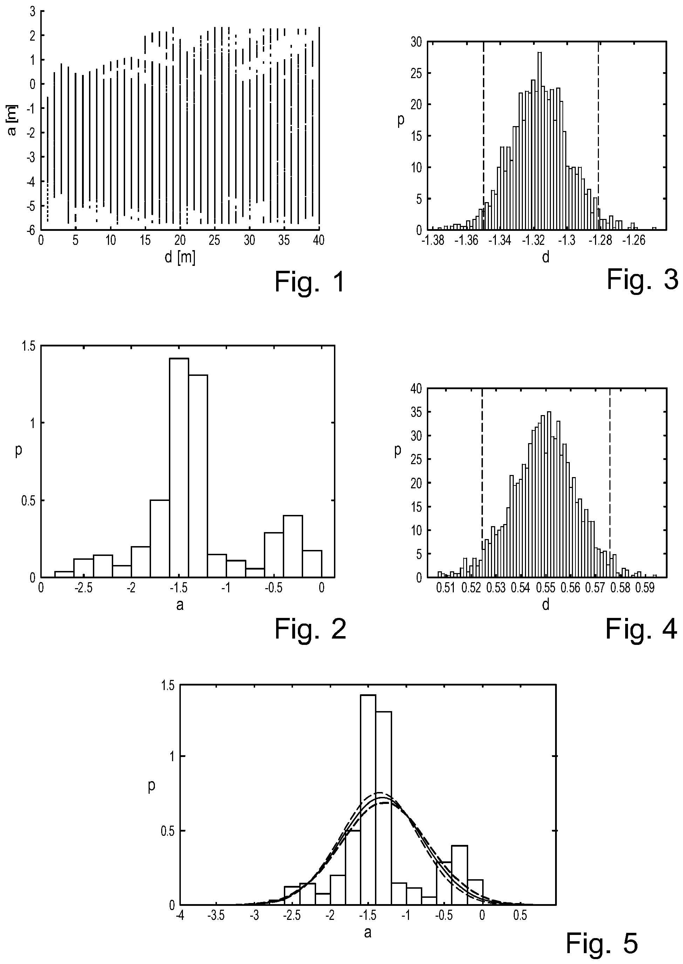

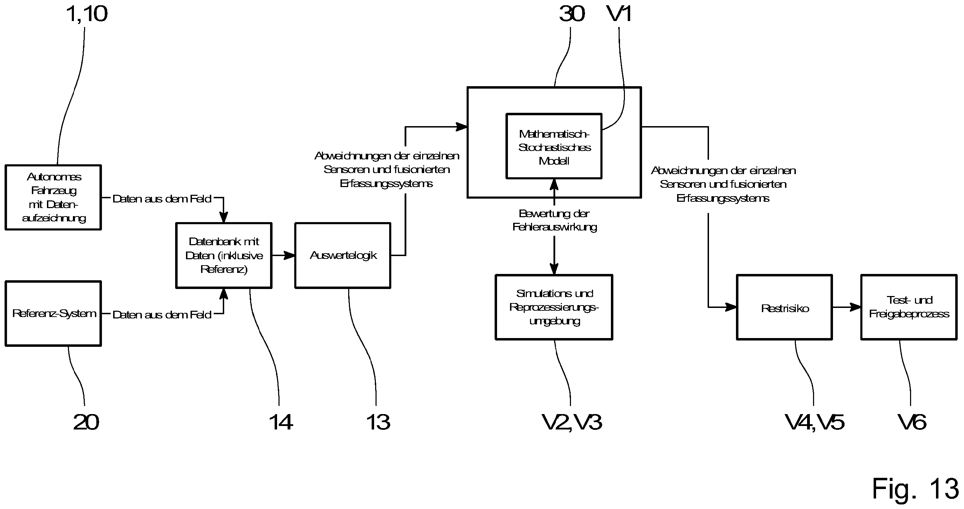

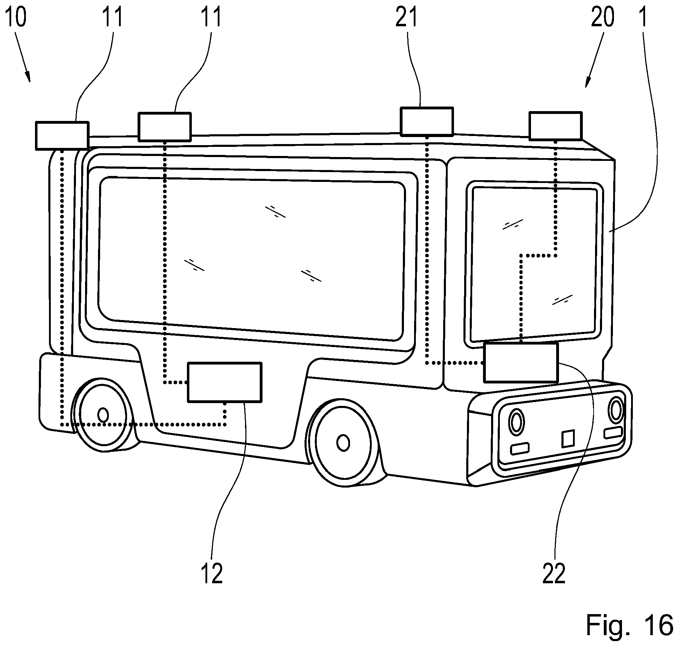

Das Diagramm in Fig. 1 zeigt die Abweichungen a eines Kamera-Sensors über die Distanz d. Die Kamera ist ein Sensor 11 eines Sensorsystems 10, siehe auch Fig. 16. Die Abweichungen a ergeben sich aus einem Vergleich der Kamera-Daten von aufgenommen Messungen mit Referenzdaten eines Referenzsensorsystems 20. Das Referenzsensorsystem umfasst hochauflösende Sensoren 21, beispielsweise eine hochauflösende Kamera. Die Referenzdaten umfassen beispielsweise Messdaten der hochauflösenden Kamera. Die Kamera-Daten und die Referenzdaten werden in einer Datenbank, beispielsweise einem Cloud-Speicher oder einer Datenfarm, hinterlegt. Eine Auswertelogik 13, beispielsweise ein Computer, ein Prozessorkern oder ein Chip mit einem Logikbaustein, bildet beispielsweise die Differenz der Kamera-Daten und der Referenzdaten und gibt diese als Abweichung a aus, siehe auch Fig. 13. Damit werden Messfehler der Kamera aufgezeichnet.

Erfindungsgemäß werden analog Abweichungen a für andere Sensoren 11 des Sensorsystem 10, beispielsweise Radar und/oder Lidar, erhalten. Die Abweichungen a für Lidar-Daten werden beispielsweise synthetisch erzeugt. Dazu werden Datasheets von Lidar Sensoren als Referenzdaten genommen.

Erfindungsgemäß werden Abweichungen a zwischen dem Sensorsystem 10 und dem Referenzsystem 20 auch für unterschiedliche Niederschlagsintensitäten oder unterschiedliche Fahrzeuggeschwindigkeiten betrachtet.

Die Daten des Sensorsystems 10 umfassen beispielsweise 50 aufgenommene Szenarien, beispielsweise "Anhalten und Weiterfahren", mit ca. 3 Millionen Datenpunkten.

Aus den in Fig. 1 gezeigten Abweichungen a wird das in Fig. 2 gezeigte Histogramm erstellt. Das Histogramm stellt die Auftrittswahrscheinlichkeiten p der einzelnen Abweichungen a der Kamera dar. Analog werden für weitere Sensoren 11 des Sensorsystems derartige Histogramme erhalten.

Aus dem in den Figuren 3 und 4 dargestellte Bootstrapping der Abweichungen a der Kamera-Daten resultiert der Mittelwert und die Standardabweichung dieser Abweichungen a. Analog wird ein Bootstrapping für weitere Sensoren 11 des Sensorsystems 10 durchgeführt. Im Bootstrapping werden n Stichproben ausgewählt und für jede Stichprobe der Mittelwert und die Standardabweichung berechnet. Daraus resultiert die in Fig. 3 gezeigte Verteilung des Mittelwertes und die in Fig. 4 gezeigte Verteilung der Standardabweichung.

Mittels der so erhaltenen Konfidenzintervall-Grenzen für den Mittelwert, siehe Fig. 3, und der Standardabweichung, siehe Fig. 4, wird das Histogramm der Fig. 2 mit einer Wahrscheinlichkeitsverteilung approximiert. Die resultierende Wahrscheinlichkeitsverteilung für die Abweichungen a der Kamera-Daten ist in Fig. 5 gezeigt.

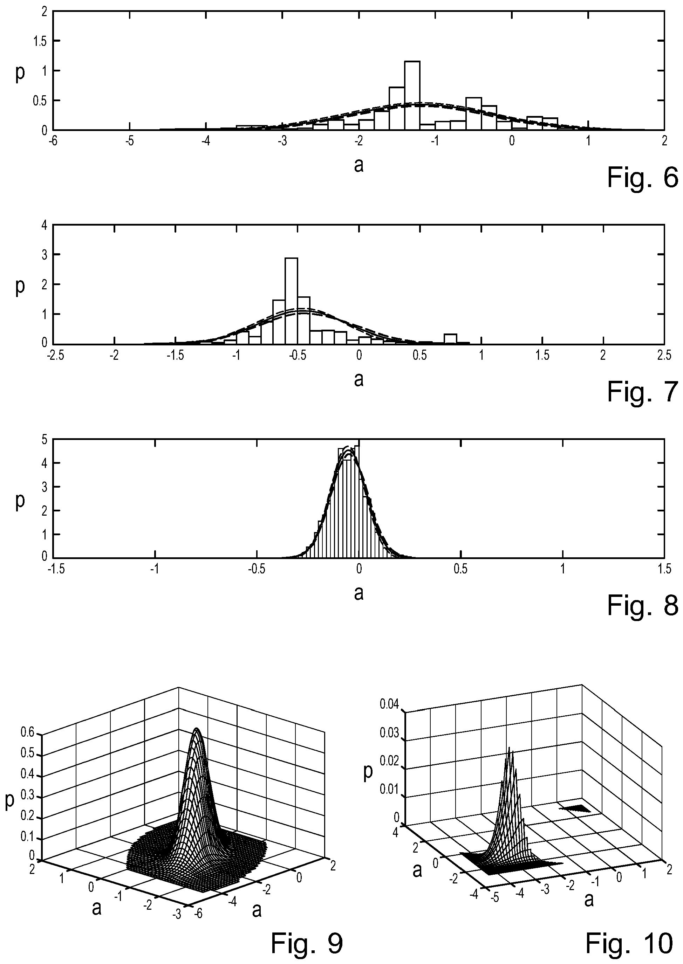

Fig. 6 zeigt eine weitere Wahrscheinlichkeitsverteilung für die Abweichungen a von weiteren Kamera-Daten, Fig. 7 eine Wahrscheinlichkeitsverteilung für die Abweichungen a von Radar-Daten und Fig. 8 eine Wahrscheinlichkeitsverteilung für die Abweichungen a von Lidar-Daten. Fig. 8 beruht auf synthetischen Abweichungen a der Lidar-Daten, die darauf beruhen, dass ein Datasheet des Lidar Sensors als Referenz genommen wurde.

Die in Fig. 9 gezeigte gemeinsame Wahrscheinlichkeitsverteilung ist eine mehrdimensionale Wahrscheinlichkeitsverteilung erhalten aus einzelnen Wahrscheinlichkeitsverteilungen der Abweichungen a der Kamera-, Radar- und Lidar-Daten. In Fig. 9 sind auf einer x-Achse die Abweichungen a der Radar-Daten, auf einer y-Achse die Abweichungen a der Kamera-Daten und auf einer z-Achse die gemeinsame Wahrscheinlichkeitsverteilung dargestellt. Die gemeinsame Wahrscheinlichkeitsverteilung ist für eine fixe Abweichung a der Lidar-Daten dargestellt. Für jede Abweichung a der Lidar-Daten wird eine entsprechend Fig. 9 erhalten. Die gemeinsame Wahrscheinlichkeitsverteilung wird erfindungsgemäß in einem Verfahrensschritt V1 bereitgestellt.

In einem Verfahrensschritt V2 werden Abweichungskombinationen abgetastet und Auftrittswahrscheinlichkeiten p für die abgetasteten Abweichungskombinationen mittels der gemeinsamen Wahrscheinlichkeitsverteilung berechnet. Damit werden kritische Fehlerkombinationen erzeugt. Beispielsweise werden in einer Simulation- und/oder Reprozessierungsumgebung Fehlerkombinationen simuliert. Mittels der gemeinsamen Wahrscheinlichkeitsverteilung wird dann die Fehlerauswirkung bewertet.

In einem dritten Verfahrensschritt werden die Referenzdaten mit den abgetasteten Abweichungskombinationen beaufschlag. Die beaufschlagten Referenzdaten werden mittels einer Fusionseinheit 12 des Sensorsystems 10 prozessiert und es werden Fusionsergebnisse erhalten.

Die Fusionsergebnisse werden in einem vierten Verfahrensschritt V4 mit einer Grenzzustandsfunktion ausgewertet, um aus der gemeinsamen Wahrscheinlichkeitsverteilung diejenigen Auftrittswahrscheinlichkeiten p zu entfernen, aus deren zugrundeliegenden Abweichungskombinationen solche Fusionsergebnisse resultieren, welche eine vorgegebene Bedingung erfüllen. Im Ergebnis wird die in Fig. 10 gezeigte Restwahrscheinlichkeitsverteilung erhalten.

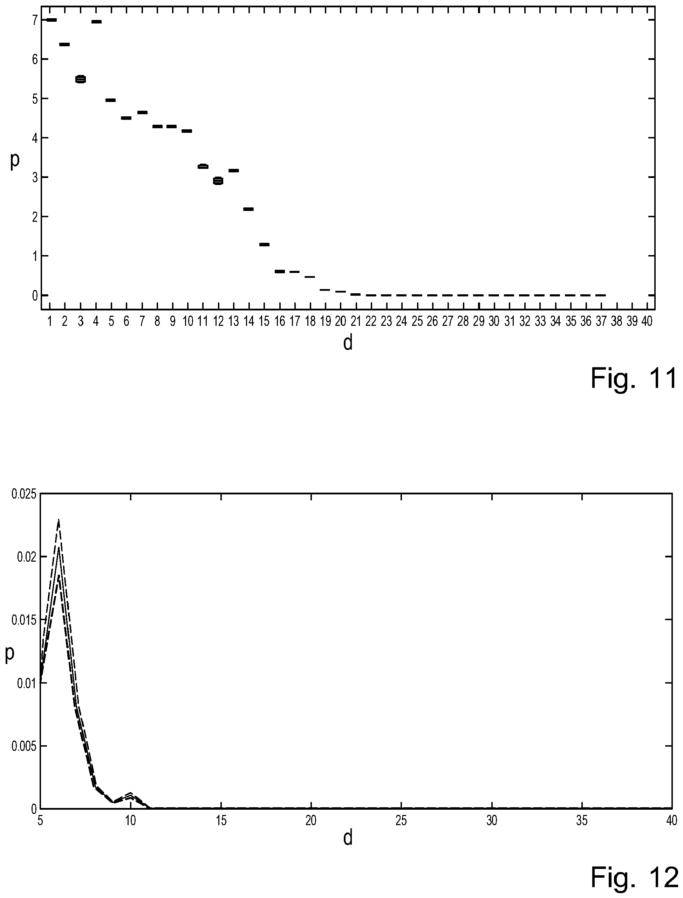

Die Restwahrscheinlichkeitsverteilung wird in einem fünften Verfahrensschritt V5 integriert und es wird eine absolute Fehlerwahrscheinlichkeit P erhalten, siehe Fig. 11 und 12. Die absolute Fehlerwahrscheinlichkeit P wird beispielsweise mittels trapezoid numerischer Integration approximiert.

In einem sechsten Verfahrensschritt V6 wird in Abhängigkeit der absoluten Fehlerwahrscheinlichkeit P das Sensorsystem 10 in einem Test- und Freigabeprozess freigegeben. Die absolute Fehlerwahrscheinlichkeit P stellt eine Legitimationsbasis für die Testbasis, das heißt die verwendeten Ausgangsdaten des Sensorsystems 10, der Referenzdaten und der Szenarien dar. Da durch die Beobachtung der einzelnen Fehlerbilder nicht die in der Literatur aktuell geforderten 2 Milliarden Kilometer oder Stundenäquivalente notwendigerweise real eingefahren werden müssen, beispielsweise dem Fahrzeug 1 und dem daran verbauten Sensorsystem 10 und Referenzsensorsystem 20, ermöglicht die Legitimation einer kleinen Testbasis mittels der absoluten Fehlerwahrscheinlichkeit P die Freigabe einer autonomen Fahrzeugtechnologie.

Fig. 13 stellt den Gegenstand der Erfindung in der offline Variante in einer Übersicht dar. Das autonome Fahrzeug 1 ist beispielsweise der in Fig. 16 gezeigte people mover. Das mathematisch stochastische Modell umfasst die Wahrscheinlichkeitsverteilungen der einzelnen Sensoren 11 des Sensorsystems 10 und die daraus resultierende mehrdimensionale gemeinsame Wahrscheinlichkeitsverteilung. Das erfindungsgemäße Verfahren wird mittels der Prozessiereinheit 30 durchgeführt. Die Verfahrensschritte V2 und V3 werden in einer Simulations- und Reprozessierungsumgebung, die Teil der Prozessiereinheit sein können, ausgeführt. Die Simulationsumgebung ist beispielsweise eine Software, beispielsweise CarMaker. Mittels der Verfahrensschritte V4 und V6 wird eine Aussage über ein Restrisiko erhalten.

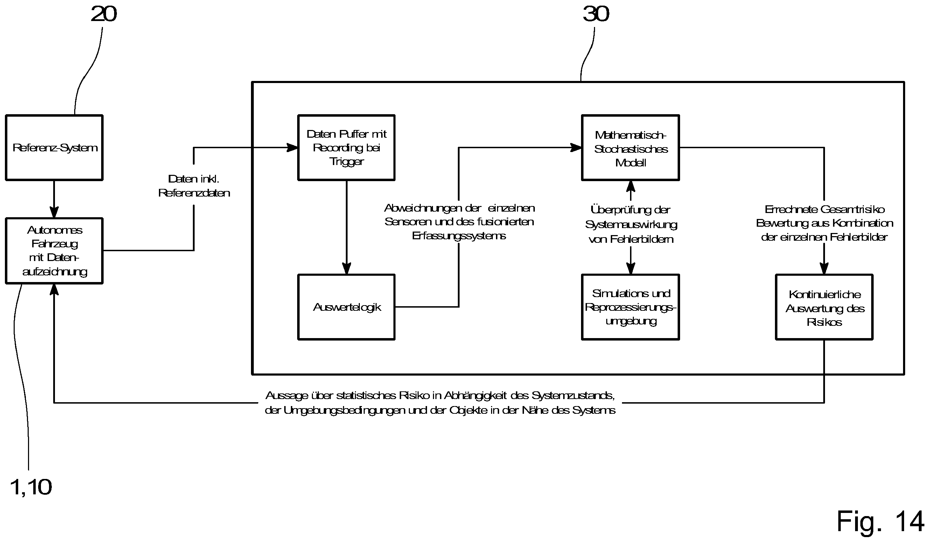

Fig. 14 stellt den Gegenstand der Erfindung in der online Variante in einer Übersicht dar. Im Gegensatz zu Fig. 13 wird die absolute Fehlerwahrscheinlichkeit P kontinuierlich ausgewertet und in eine Fahrstrategie des Fahrzeuges 1 rückgekoppelt.

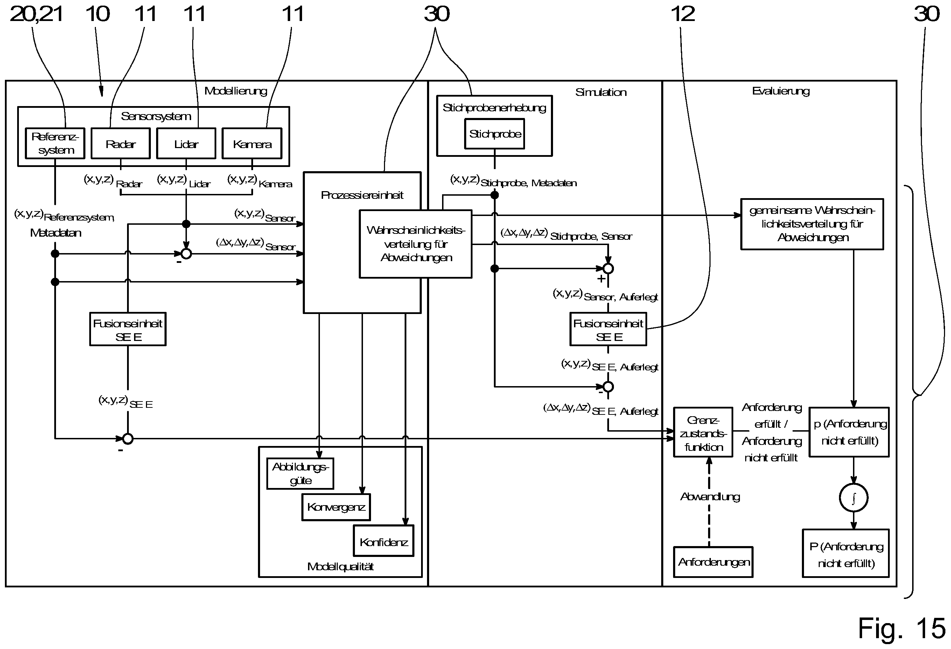

Fig. 15 stellt die technische Struktur der Prozessiereinheit 30 der erfindungsgemäßen Vorrichtung dar. Kern des Verfahrens, das von der Prozessiereinheit 30 durchgeführt wird, ist das Erhalten der Wahrscheinlichkeitsverteilungen der Abweichungen der einzelnen Sensoren 11, siehe Fig. 6, 7 und 8, die daraus resultierende gemeinsame Wahrscheinlichkeitsverteilung, das Abtasten von Abweichungskombinationen und das Erhalten der absoluten Fehlerwahrscheinlichkeit P. Der Dateneingang der Prozessiereinheit 30 umfasst die Ausgangsdaten des Sensorsystems 10 und die Referenzdaten des Referenzsensorsystems 20. Der Datenausgang der Prozessiereinheit umfasst die absolute Fehlerwahrscheinlichkeit P.

Der people mover in Fig. 16 ist ein Beispiel für ein erfindungsgemäßes Fahrzeug 1. Das Fahrzeug 1 umfasst ein Sensorsystem 10 mit mehreren Sensoren 11. In Fig. 16 ist aus Übersichtsgründen nur einer der Sensoren 11 gezeigt. Die Ausgangsdaten der einzelnen Sensoren 11 werden in der Fusionseinheit 12 des Sensorsystems 10 fusioniert. Das Fahrzeug 1 umfasst ferner ein Referenzsensorsystem 20 mit mehreren Referenzsensoren 21. In Fig. 16 ist aus Übersichtsgründen nur einer der Referenzsensoren 21 gezeigt. Die Ausgangsdaten der einzelnen Sensoren 21 werden in einer Fusionseinheit 22 des Referenzsensorsystems 20 fusioniert.

Der people mover bietet als vollelektrischer Kleinbus bequem Platz für 15 Personen. Gleichzeitig ist seine Grundfläche nicht größer als die einer großen Limousine. Dadurch ist er wendig und findet überall im urbanen Umfeld seinen Weg. Der people mover fährt lokal emissionsfrei, bietet verschiedene Konnektivitätsservices und die Möglichkeit hochautomatisiert zu fahren. Nach einem Aspekt der Erfindung umfasst das Fahrzeug 1, beispielsweise der people mover, eine Konnektivitätsschnittstelle.

Ein Nutzer kann den people mover als Shuttle flexibel per App über die Konnektivitätsschnittstelle anfordern und ist somit nicht mehr an starre Fahrpläne gebunden.

**Patentansprüche**

1. Verfahren zur Freigabe eines Sensorsystems (10) zur Erfassung von Objekten in einem Umfeld eines Fahrzeuges (1), das Verfahren umfassend die Schritte:

   • Bereitstellen einer gemeinsamen Wahrscheinlichkeitsverteilung für Abweichungen (a) zwischen Ausgangsdaten des Sensorsystems (10) und Referenzdaten auf Ebene von Programmabschnitten zum Erfassen von Objekten des Sensorsystems (10), auf Ebene von Sensoren (11) des Sensorsystems (10) und/oder auf Fusionsebene des Sensorsystems (10), wobei es sich bei den Ausgangsdaten und Referenzdaten um Daten aus jeweils aufgenommen Messungen handelt und wobei die gemeinsame Wahrscheinlichkeitsverteilung eine auf einem mathematisch stochastischem Modell basierende mehrdimensionale Wahrscheinlichkeitsverteilung erhalten aus einzelnen Wahrscheinlichkeitsverteilungen der Abweichungen (a) ist (V1),
   • Abtasten von Kombinationen von Abweichungen (a) der Ausgangsdaten von Sensoren (11) des Sensorsystems (10) und Berechnen von Auftrittswahrscheinlichkeiten (p) der jeweiligen Kombinationen mittels der gemeinsamen Wahrscheinlichkeitsverteilung (V2),
   • Beaufschlagen der Referenzdaten mit den abgetasteten Abweichungskombinationen, um eine Kritikalität von Fehlerbildern bezüglich Erkennungsfehlern zu bewerten, Prozessieren der beaufschlagten Referenzdaten mittels einer Fusionseinheit (12) des Sensorsystems (10) und Erhalten von Fusionsergebnissen (V3),
   • Entfernen derjenigen Auftrittswahrscheinlichkeiten (p) aus der gemeinsamen Wahrscheinlichkeitsverteilung, aus deren zugrundeliegenden Abweichungskombinationen solche Fusionsergebnisse resultieren, welche eine vorgegebene Anforderung erfüllen, und Erhalten einer Restwahrscheinlichkeitsverteilung, wobei Abweichungen zwischen den Fusionsergebnissen und den Referenzdaten mit einer Grenzzustandsfunktion ausgewertet werden, um die Auftrittswahrscheinlichkeiten (p) aus der Wahrscheinlichkeitsverteilung zu entfernen, wobei die Grenzzustandsfunktion bei einer Erfüllung einer Anforderung einen ersten Wert und bei Nicht-Erfüllung der Anforderung einen von dem ersten verschiedenen zweiten Wert liefert und mittels der Grenzzustandsfunktion der statistische Fehlerbereich des Sensorsystems bezüglich eines Restrisikos bewertet wird (V4),
   • Integration der Restwahrscheinlichkeitsverteilung und Erhalten einer absoluten Fehlerwahrscheinlichkeit (P) (V5) und
   • Freigabe des Sensorsystems (10) in Abhängigkeit der absoluten Fehlerwahrscheinlichkeit (P) (V6),

   wobei bei dem Verfahren eine Konfidenz der Ausgangsdaten aus tatsächlichem Fahren einer ausreichenden Strecke oder Zeit bestimmt wird.

2. Verfahren nach Anspruch 1, wobei die Abweichungen zwischen den Ausgangsdaten des Sensorsystems (10) und Referenzdaten Abweichungen von Distanzmessungen, Wetter abhängige oder Fahrzeugzustand abhängige Abweichungen umfassen.

3. Verfahren nach Anspruch 1 oder 2, wobei für jeden Sensor (11) des Sensorsystems (10) eine Wahrscheinlichkeitsverteilung für die Abweichungen dieses Sensors (11) bereitgestellt wird und die Abweichungskombinationen mittels der einzelnen Wahrscheinlichkeitsverteilungen der Sensoren (11) abgetastet werden.

4. Verfahren nach einem der Ansprüche 1 bis 3, wobei die gemeinsamen Wahrscheinlichkeitsverteilung als eine mehrdimensionale Normalverteilung für Abweichungen der einzelnen Sensoren (11) des Sensorsystems (10) bereitgestellt wird.

5. Verfahren nach einem der Ansprüche 1 bis 4, wobei die Ausgangsdaten des Sensorsystems (10) und die Referenzdaten während Fahrten mit dem Fahrzeug (1) erhalten werden, wobei die Referenzdaten von einem Referenzsensorsystem (20) aufgenommene Referenzdaten und/oder mittels Sensormodellen erzeugte Referenzdaten umfassen.

6. Verfahren nach einem der Ansprüche 1 bis 5, wobei die beaufschlagten Referenzdaten in Model in the Loop, Software in the Loop oder Hardware in the Loop Simulationen oder mittels Ersatzmodellen prozessiert werden.

7. Verfahren nach einem der Ansprüche 1 bis 6, wobei die Fusionsergebnisse unter Verwendung einer Redundanz des Sensorsystems (10) erhalten werden.

8. Verfahren nach einem der Ansprüche 1 bis 7, wobei eine Menge der Ausgangsdaten und der Referenzdaten inkrementell vergrößert wird.

9. Computerprogramm zur Freigabe eines Sensorsystems (10) zur Erfassung von Objekten in einem Umfeld eines Fahrzeuges (1), umfassend Befehle, die bei der Ausführung des Computerprogramms durch eine Prozessiereinheit (30) diese veranlassen, die Schritte des Verfahrens nach einem der Ansprüche 1 bis 8 auszuführen.

## Claims

1. Method for enabling a sensor system (10) for detecting objects in an environment of a vehicle (1), the method comprising the steps of:

   • providing a joint probability distribution for deviations (a) between output data of the sensor system (10) and reference data at the level of program sections for detecting objects of the sensor system (10), at the level of sensors (11) of the sensor system (10) and/or at the fusion level of the sensor system (10), wherein the output data and reference data are data from respectively taken measurements and wherein the joint probability distribution is a multidimensional probability distribution based on a mathematically stochastic model and obtained from individual probability distributions of the deviations (a) (V1),
   • sampling combinations of deviations (a) of the output data from sensors (11) of the sensor system (10) and calculating probabilities of occurrence (p) of the respective combinations by means of the joint probability distribution (V2),
   • supplying the sampled deviation combinations to the reference data in order to assess a criticality of error patterns regarding recognition errors, using a fusion unit (12) of the sensor system (10) to process the reference data which have been supplied with said sampled deviation combinations, and obtaining fusion results (V3),
   • removing from the joint probability distribution those occurrence probabilities (p) whose underlying deviation combinations result in such fusion results which meet a predefined requirement, and obtaining a residual probability distribution, wherein deviations between the fusion results and the reference data are evaluated using a limit state function in order to remove the occurrence probabilities (p) from the probability distribution, wherein the limit state function delivers a first value in the event that a requirement is met and a second value, which is different from the first, in the event that the requirement is not met, and the statistical error margin of the sensor system regarding a residual risk is assessed using the limit state function (V4),
   • integrating the residual probability distribution and obtaining an absolute error probability (P) (V5) and

• enabling the sensor system (10) on the basis of the absolute error probability (P) (V6),

wherein, in the method, a confidence of the output data is determined from actual driving of a sufficient distance or time.

2. Method according to Claim 1, wherein the deviations between the output data of the sensor system (10) and reference data comprise deviations from distance measurements, weather-dependent or vehicle-state-dependent deviations.

3. Method according to Claim 1 or 2, wherein, for each sensor (11) of the sensor system (10), a probability distribution for the deviations of this sensor (11) is provided and the deviation combinations are sampled by means of the individual probability distributions of the sensors (11).

4. Method according to one of Claims 1 to 3, wherein the joint probability distribution is provided as a multidimensional normal distribution for deviations of the individual sensors (11) of the sensor system (10).

5. Method according to one of Claims 1 to 4, wherein the output data of the sensor system (10) and the reference data are obtained during journeys with the vehicle (1), wherein the reference data comprise reference data taken by a reference sensor system (20) and/or reference data generated by sensor models.

6. Method according to one of Claims 1 to 5, wherein the reference data which have been supplied with said sampled deviation combinations are processed in model-in-the-loop, software-in-the-loop or hardware-in-the-loop simulations or using equivalent models.

7. Method according to one of Claims 1 to 6, wherein the fusion results are obtained using a redundancy of the sensor system (10).

8. Method according to one of Claims 1 to 7, wherein an amount of the output data and of the reference data is increased incrementally.

9. Computer program for enabling a sensor system (10) for detecting objects in an environment of a vehicle (1), comprising commands which, when the computer program is executed by a processing unit (30), cause said processing unit to perform the steps of the method according to one of Claims 1 to 8.

**Revendications**

1. Procédé de déclenchement d'un système de capteurs (10) destiné à détecter des objets dans l'environnement d'un véhicule (1), le procédé comprenant les étapes suivantes :

   ■ fournir une distribution de probabilité commune pour les écarts (a) entre des données de sortie du système de capteurs (10) et des données de référence au niveau de portions de programme pour détecter des objets du système de capteurs (10), au niveau de capteurs (11) du système de capteurs (10) et/ou au niveau de fusion du système de capteurs (10), les données de sortie et les données de référence étant chacune des données de mesures acquises et la distribution de probabilité commune étant une distribution de probabilité multidimensionnelle basée sur un modèle mathématique stochastique et obtenue à partir de distributions de probabilité individuelles des écarts (a) (V1),
   ■ échantillonner des combinaisons d'écarts (a) des données de sortie de capteurs (11) du système de capteurs (10) et calculer des probabilités d'occurrence (p) des combinaisons respectives à l'aide de la distribution de probabilité commune (V2),
   ■ appliquer les combinaisons d'écarts échantillonnées aux données de référence afin d'évaluer la criticité d'images d'erreur par rapport à des erreurs de détection, traiter les données de référence appliquées à l'aide d'une unité de fusion (12) du système de capteurs (10) et obtenir des résultats de fusion (V3),
   ■ supprimer de la distribution de probabilité commune les probabilités d'occurrence (p) dont les combinaisons d'écarts sous-jacentes aboutissent à des résultats de fusion qui satisfont à une exigence spécifiée, et obtenir une distribution de probabilité résiduelle, des écarts entre les résultats de fusion et les données de référence étant évalués avec une fonction d'état limite afin de supprimer les probabilités d'occurrence (p) de la distribution de probabilité, la fonction d'état limite fournissant une première valeur lorsqu'une exigence est satisfaite et une deuxième valeur, différente de la première, lorsque l'exigence n'est pas satisfaite, et la gamme d'erreur statistique du système de capteurs par rapport à un risque résiduel étant évaluée par la fonction d'état limite (V4) ;

- intégrer la distribution de probabilité résiduelle et obtenir une probabilité d'erreur absolue (P) (V5) et
- déclencher le système de capteurs (10) en fonction de la probabilité d'erreur absolue (P) (V6),

une fiabilité des données de sortie étant déterminée dans le procédé à partir d'une conduite réelle sur une distance suffisante ou pendant un temps suffisant.

2. Procédé selon la revendication 1, les écarts entre les données de sortie du système de capteurs (10) et les données de référence comprenant des écarts par rapport à des mesures de distance, des écarts dépendants des conditions météorologiques ou des écarts dépendants de l'état du véhicule.

3. Procédé selon la revendication 1 ou 2, pour chaque capteur (11) du système de capteurs (10) étant fournie une distribution de probabilité pour les écarts de ce capteur (11) et les combinaisons d'écarts étant échantillonnées à l'aide des distributions de probabilité individuelles des capteurs (11).

4. Procédé selon l'une des revendications 1 à 3, la distribution de probabilité commune étant prévue sous la forme d'une distribution normale multidimensionnelle pour les écarts des capteurs individuels (11) du système de capteurs (10).

5. Procédé selon l'une des revendications 1 à 4, les données de sortie du système de capteurs (10) et les données de référence étant obtenues pendant la conduite du véhicule (1), les données de référence comprenant des données de référence acquises par un système de capteurs de référence (20) et/ou des données de référence générées à l'aide de modèles de capteur.

6. Procédé selon l'une des revendications 1 à 5, les données de référence appliquées étant traitées dans des simulations de type de modèle en boucle, logiciel en boucle ou matériel en boucle ou à l'aide de modèles de remplacement.

7. Procédé selon l'une des revendications 1 à 6, les résultats de fusion étant obtenus à l'aide d'une redondance du système de capteurs (10).

8. Procédé selon l'une des revendications 1 à 7, la quantité de données de sortie et de données de référence étant augmentée de manière incrémentielle.

9. Programme informatique de déclenchement d'un système de capteurs (10) destiné à détecter des objets dans l'environnement d'un véhicule (1), ledit programme informatique comprenant des instructions qui, lorsque le programme informatique est exécuté par une unité de traitement (30), ordonnent à celle-ci d'exécuter les étapes du procédé selon l'une des revendications 1 à 8.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

EP 4 055 411 B1

**20**

**30**

Referenz-System

Daten inkl. Referenzdaten

Autonomes Fahrzeug mit Daten- aufzeichnung

Daten Puffer mit Recording bei Trigger

Mathematisch- Stochastisches Modell

Abweichnungen der einzelnen Sensoren und des fusionierten Erfassungssystems

Überprüfung der Systemauswirkung von Fehlerbildern

Errechnete Gesamtrisiko Bewertung aus Kombination der einzelnen Fehlerbilder

Auswertelogik

Simulations und Reprozessierungs- umgebung

Kontinuierliche Auswertung des Risikos

Aussage über statistisches Risiko in Abhängigkeit des Systemzustands, der Umgebungsbedingungen und der Objekte in der Nähe des Systems

**1,10**

EP 4 055 411 B1

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Autonomes Fahren - Technische, rechtliche und gesellschaftliche Aspekte. Springer Vieweg, 2015
- Functional Safety Verification for Autonomous UGVs-Methodology Presentation and Implementation on a Full-Scale System. **MELTZ DANIEL et al.** IEEE TRANSAC-TIONS ON INTELLIGENT VEHI-CLES. IEEE, 01. September 2019, vol. 4, 472-485
- Quantifying trust in autonomous system under uncertainties. **DUTTA RAJ GAUTAM et al.** 2016 29TH IEEE INTERNATIONAL SYSTEM-ON-CHIP CONFERENCE (SOCC). IEEE, 06. September 2016, 362-367
- **J. KAPINSKI.** Simulation-Based Approaches for Verification of Embedded Control Systems: An Overview of Traditional and Advanced Modeling, Testing, and Verification Techniques. *IEEE CONTROL SYSTEMS,* 01. Dezember 2016, vol. 36 (6), ISSN 1066-033X, 45-64